## Europäisches Patentamt

## European Patent Office

## Office européen des brevets

(19)

(11) Veröffentlichungsnummer: **0 194 605**
**B1**

(12)

# EUROPÄISCHE PATENTSCHRIFT

(45) Veröffentlichungstag der Patentschrift:
01.06.88

(51) Int. Cl.⁴: **C 03 B 37/06**

(21) Anmeldenummer: **86103050.0**

(22) Anmeldetag: **07.03.86**

(54) **Einrichtung zur Herstellung von Mineralfasern aus silikatischen Rohstoffen wie Basalt, insbesondere nach dem Düsenblasverfahren.**

(30) Priorität: **15.03.85 DE 3509425**

(43) Veröffentlichungstag der Anmeldung:
**17.09.86 Patentblatt 86/38**

(45) Bekanntmachung des Hinweises auf die Patenterteilung:
**01.06.88 Patentblatt 88/22**

(84) Benannte Vertragsstaaten:
**BE DE FR IT LU NL**

(56) Entgegenhaltungen:
**DE - A - 2 118 081**

(73) Patentinhaber: **Grünzweig + Hartmann und Glasfaser AG, Bürgermeister-Grünzweig-Strasse 1-47, D-6700 Ludwigshafen am Rhein (DE)**

(72) Erfinder: **Bengl, Dieter, Dahlienstrasse 11, D-6704 Mutterstadt (DE)**
Erfinder: **Horres, Johannes, Hinterer Rindweg 25, D-6802 Ladenburg (DE)**

(74) Vertreter: **Kuhnen, Wacker & Partner, Schneggstrasse 3-5 Postfach 1729, D-8050 Freising (DE)**

## Beschreibung

Die Erfindung betrifft eine Einrichtung zur Herstellung von Mineralfasern aus silikatischen Rohstoffen wie Basalt, insbesondere nach dem Düsenblasverfahren, gemäss dem Oberbegriff des Anspruchs 1.

Beim Düsenblasverfahren zur Herstellung von Mineralfasern werden die aus dem Zerfaserungsaggregat in Form einer Blasdüseneinrichtung austretenden Mineralfasern einem Fallschacht zugeführt, über dessen Länge der die Fasern tragende Strömungsmittelstrahl Gelegenheit hat, aufzufächern, so dass die Fasern den Schachtquerschnitt im wesentlichen homogen anfüllen und so auf ein Förderband zur Bildung einer Mineralfaserbahn abgelegt werden können. Im Eintrittsbereich des Fallschachtes wird Bindemittel wie Phenolharz in fliessfähiger Konsistenz eingesprüht, welches an den Fasern haftet und mit diesen zu Boden auf das Förderband sinkt. Dabei gelangen randseitige Fasern insbesondere im unteren Abschnitt des Fallschachtes in Berührung mit den Umfangswänden des Schachtes, so dass das an den Fasern haftende Bindemittel dazu führen kann, dass die Fasern an den Schachtwänden haftenbleiben. Infolge der relativ hohen Temperatur im Schacht, dem ständig von den Zerfaserungsaggregaten her Fasern mit vergleichsweise hoher Temperatur zugeführt werden, kann es dabei auch zu einem Aushärten des Bindemittels an den Schachtwänden kommen, so dass nur noch sehr schwer zu beseitigende Anbackungen auftreten können.

Um dies zu vermeiden, ist es bekannt, wenigstens die Seitenwände des Schachtes mit grösserer Fläche beweglich als sogenannte Drehwände auszubilden, derart, dass die Seitenwände im Grunde vertikal stehende Förderbahnen darstellen, deren Förderband ständig umläuft. Die anhaftenden Fasern gelangen so mit dem Förderband aus dem Bereich des Schachtinnenraumes, wo die Oberfläche des Bandes gereinigt und auf der anderen Seite wieder in den Schachtinnenraum eingeführt werden kann.

Auf diese Weise ist es durchaus möglich, im laufenden Betrieb einen grossen Teil anhaftender Fasern kontinuierlich wieder zu beseitigen und so grössere und stabilere Anbackungen zu vermeiden.

Diese bekannte Vorgehensweise, welche der üblichen Technik in der Praxis entspricht, ist jedoch ausserordentlich aufwendig, und zwar sowohl von den Investitionskosten als auch von den Wartungskosten her. Die Antriebe der Drehwände sind starker Verschmutzung ausgesetzt und neigen daher zu Ausfall. Wenn die Anlage zu Umstellungs- bzw. Reparaturarbeiten oder dergleichen steht, so erfolgt keine Reinigung und können dennoch Anbackungen entstehen, die umständlich zu beseitigen sind. Der Reinigungsvorrichtung entgehende Rückstände insbesondere im Inneren der Drehwände bilden ebenfalls praktisch nicht zu beseitigenden Schmutzanfall. Wenn Anbackungen in Bildung begriffen sind oder sich gebildet haben und anschliessend etwa durch eine Verstellung des Schachtquerschnittes abgerieben werden, so gelangen sie auf das Produktionsband und führen dort zu Produktionsfehlern sowie Störungen im Bereich des Schachtauslaufes.

Wenn lediglich die grossflächigen Seitenwände, nicht aber die Stirnwände des Schachtes mit derartigen Drehwänden ausgestattet sind, so sind entsprechende Anbackungen an den Stirnwänden unvermeidlich, wobei diese Anbackungen bis zu erheblicher Grösse anwachsen können, bis sie etwa durch Eigengewicht herunterfallen und auf diese Weise zu Produktionsstörungen führen.

Als wesentliches prinzipielles Problem hat sich darüber hinaus gezeigt, dass die Herstellung einer wirklich massgenauen Abdichtung zwischen Drehwänden und starren Wänden, und erst recht zwischen gegebenenfalls benachbarten Drehwänden, praktisch nicht möglich ist. Hierdurch gelangt in erheblichem Umfange Falschluft in den Fallschacht, die mit der über dem Fallschacht angesaugten und erwünschten Sekundärluft zusammen unter dem Förderband abgesaugt werden muss. Weiterhin ergeben sich erhebliche Faserverluste bei Faseraustritt durch undichte Stellen des Fallschachtes hindurch, die zu den Faserverlusten infolge von Anbackungen usw. kommen.

Demgegenüber liegt der Erfindung die Aufgabe zugrunde, eine Einrichtung der im Oberbegriff des Anspruchs 1 angegebenen Gattung zu schaffen, die Produktionsstörungen und Produktionsverluste im Bereich des Fallschachtes vermeiden kann.

Die Lösung dieser Aufgabe erfolgt durch die kennzeichnenden Merkmale des Anspruchs 1.

Es hat sich überraschend gezeigt, dass eine ausreichende Kühlung der Wände des Fallschachtes alleine bereits ausreicht, Anbackungen in merklichem Umfange zu vermeiden. An kalten Schachtwänden hat das Bindemittel keinerlei Tendenz zur Verfestigung, sondern bleibt in fliessflähiger Konsistenz. Im Hinblick auf die relativ geringe aufgebrachte Bindemittelmenge kann voll fliessfähiges Bindemittel hingegen Fasern in einem merklichen Umfange nicht an der Wand halten. Die Fasern, welche die Wand berühren, kommen somit bereits durch die turbulente Strömung im Fallschacht wieder von der Wand frei, so dass sich gewissermassen ein Selbstreinigungseffekt ergibt. Dadurch ist es möglich, sämtliche Umfangswände des Fallschachtes massgenau abzudichten, so dass weder durch Anbackungen noch durch Undichtheiten Faserverlust entstehen kann und die Falschluft auf ein Minimum reduziert ist. Entsprechend einfach gestaltet sich natürlich auch die Abdichtung im Bereich des Förderbandes, so dass ein Faserteppich mit exakt rechtwinkligen Kanten und ausgezeichneter Bahnverteilung erzielt wird.

Eine intensive Kühlung mit bei gegebener Kühlmitteltemperatur geringstmöglicher Wandtemperatur ergibt sich gemäss Anspruch 2 dadurch, dass der Fallschacht in eine Mehrzahl von übereinander angeordneten Schachtabschnitten unterteilt ist, die jeweils eigenen Kühlflüssigkeitskreislauf besitzen.

Weiterhin begünstigt gerade die erfindungsgemässe starre Ausbildung der Umfangswände eine Verwendung beweglicher Wände gemäss Anspruch 3, die insbesondere im Bereich des unteren Schachtabschnittes von Bedeutung für die Bildung eines gewünschten Faserteppichs sind.

Weitere Einzelheiten, Merkmale und Vorteile der Erfindung ergeben sich aus der nachfolgenden Beschreibung einer Ausführungsform anhand der Zeichnung:

Es zeigt

Fig. 1 eine erfindungsgemässe Einrichtung in einer schematischen Stirnansicht und

Fig. 2 die Einrichtung gemäss Fig. 1 in einer Seitenansicht.

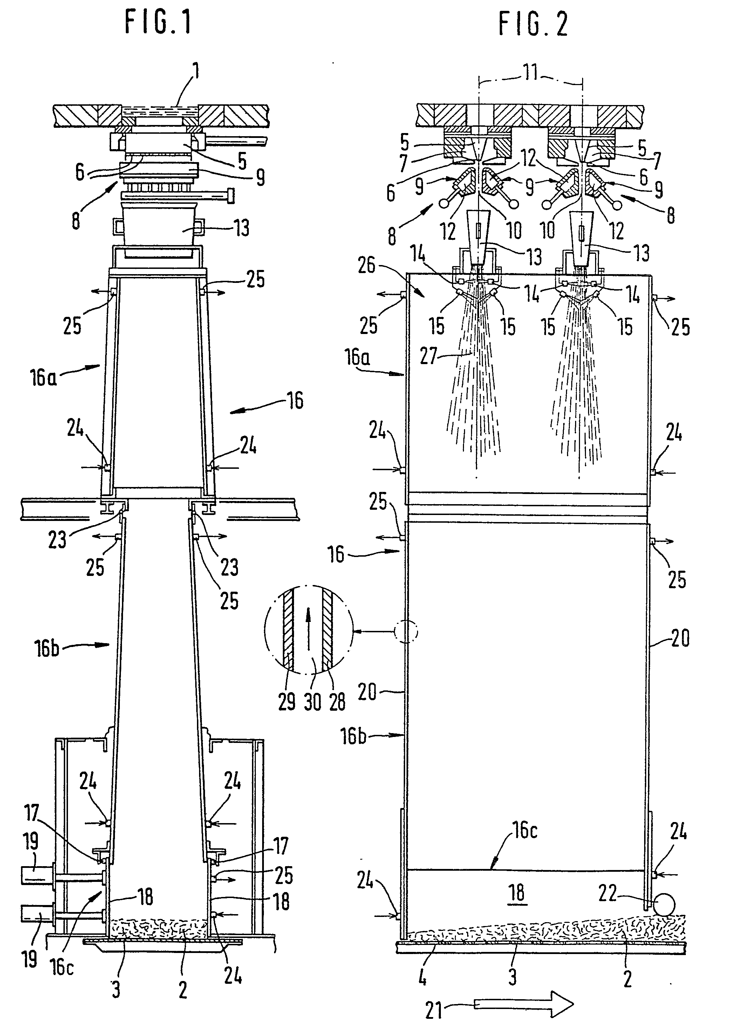

Wie die Zeichnung veranschaulicht, dient eine erfindungsgemässe Einrichtung dazu, eine mit 1 bezeichnete mineralische Schmelze im Kopfbereich der Einrichtung in Mineralfasern umzuwandeln, die zur Bildung einer kontinuierlichen Mineralfaser-Bahn 2 auf einem Förderband 3 abgelegt und – in der Darstellung gemäss Fig. 2 nach rechts – weggefördert werden. Das Förderband 3 ist, wie in Fig. 2 angedeutet ist, mit Perforationen 4 versehen, durch welche hindurch in nicht näher veranschaulichter Weise Luft bzw. Gas nach unten abgesaugt werden kann, wie dies bei der Mineralfaserherstellung an sich üblich ist.

Die Schmelze 1 aus einer nicht näher dargestellten Schmelzwanne wird im Beispielsfalle zwei nebeneinander angeordneten Verteilerwannen 5 zugeführt, die je eine Reihe von Austrittsöffnungen 6 für Schmelze besitzen. Die Verteilerwannen 5 sind in der üblichen und bekannten Weise aus Platin gefertigt und werden durch Flammen in seitlichen Hohlräumen 7 auf einer gewünschten Temperatur gehalten.

Unterhalb der Austrittsöffnungen 6 sind, wie beim Düsenblasverfahren im Prinzip ebenfalls üblich ist, Blasdüseneinrichtungen 8 angeordnet, die aus je zwei Blasdüsenhälften 9 und einem dazwischen angeordneten Düsenspalt 10 bestehen, durch welche hindurch aus den Austrittsöffnungen 6 austretende Primärfäden der Schmelze entsprechend den aus Fig. 2 ersichtlichen Fallinien 11 treten und dabei durch Treibgas zerfasert werden, welches mit Überdruck in Hohlräumen 12 der Blasdüsenhälften bereitgestellt und über in der Zeichnung nicht sichtbare Einblasschlitze in den Düsenspalt 10 eingeblasen wird. Die dabei prinzipiell ablaufenden Vorgänge sind dem Fachmann geläufig.

An der in der Zeichnung unteren Austrittsseite der Blasdüseneinrichtungen 8 tritt ein divergierendes Strömungsbündel aus, das Treibgas, durch die Injektorwirkung des eingeblasenen Treibgases von der Oberseite der Blasdüseneinrichtung 8 her angesaugte Sekundärluft zusammen mit Verbrennungsabgasen aus den Hohlräumen 7 und die soeben gebildeten Fasern bei noch hoher Temperatur enthält. Das Strömungsbündel gelangt in düsenartig konvergierende Leitschächte 13, wodurch an deren Oberseite nochmals Sekundärluft zur weiteren Abkühlung angesaugt wird, und das so gebildete Faser-Gasgemisch am Austritt der Leitschächte 13 unter erneuter Bündelung wiederum in einem divergierenden Strömungsbündel 27 austritt. Aufgrund der langgestreckten Form der Düsenspalte 10 und Leitschächte 13 sind die Strömungsbündel natürlich entsprechend langgestreckt ausgebildet und wirken lediglich in einer Fig. 2 entsprechenden Ansicht wie schlanke Kreiskegel. Im Bereich des unteren Endes der Leitschächte 13 sind Sprühdüsen 14 zum Eindüsen von Kühlflüssigkeit wie Kühlwasser und Sprühdüsen 15 zum Eindüsen von Bindemittel wie Phenolharz in fliessfähiger Konsistenz angeordnet.

Dies ist zugleich der Eintrittsbereich eines insgesamt mit 16 bezeichneten Fallschachtes, der übereinander angeordnet einen ersten Schachtabschnitt 16a, einen zweiten Schachtabschnitt 16b und einen dritten Schachtabschnitt 16c aufweist. Im Inneren des Fallschachtes 16 kühlen die herabfallenden Fasern weiter ab und verteilen sich über den Querschnitt des Fallschachtes, so dass sich auf dem Förderband 3 eine gleichmässige Ablage als Bahn 2 ergibt, wobei die mitgeführten und mit in den Fallschacht 16 eingeführten Gase in der weiter oben bereits angedeuteten, bekannten Weise abgesaugt werden.

Der untere Schachtabschnitt 16c des Fallschachtes 16 weist bewegliche Seitenwände 18 auf, die beispielsweise über Stellglieder 19 in ihrer Lage durch Parallelverschiebung einstellbar sind und durch Mitnehmer 17 mit den angrenzenden Wänden des mittleren Schachtabschnittes 16b verbunden sind sowie, wie aus Fig. 1 deutlich wird, die seitlichen Ränder der Bahn begrenzen. Wie aus der im Bereich des Fallschachtes 16 aufgeschnittenen Darstellung der Zeichnung hervorgeht, reichen die Stirnwände 20 des mittleren Schachtabschnittes 16b bis in den Bereich des unteren Schachtabschnittes 16c und bilden somit auch dessen Stirnwände. Die Stirnwände 20 des gesamten Fallschachtes 16 sind starr angeordnet, wobei die in Wegförderrichtung gemäss Pfeil 21 hintere Stirnwand entsprechend der Höhe der Mineralfaser-Bahn 2 verkürzt ist, so dass die Mineralfaser-Bahn 2 aus dem Bereich des Fallschachtes 16 auslaufen kann, wobei beim Auslauf sogleich eine Druckbeaufschlagung und Höhenegalisierung durch eine ebenfalls gekühlte Walze 22 erfolgt.

Zwar sind somit einige der Umfangswände des Fallschachtes 16 beweglich, wie etwa die Seitenwände 18 des untersten Schachtabschnittes 16c durch Parallelverschiebung und bei Bedarf auch die Seitenwände des mittleren Schachtabschnittes 16b durch Schwenkbewegung um Scharniere 23, jedoch sind sämtliche Umfangswände als solche starr ausgebildet, besitzen also keine Bewegungsmöglichkeit für eine ständige Selbstreinigung oder dergleichen. Dafür aber sind sämtliche Umfangswände des Fallschachtes 16 doppelwandig ausgebildet und in den so gebildeten Hohlräumen von Kühlflüssigkeit durchströmt, die jeweils durch Anschlüsse 24 zuführbar und durch Anschlüsse 25 abführbar ist.

Die Fasern werden in dem mit 26 bezeichneten oberen Eintrittsbereich des Fallschachtes 16 bzw. des obersten Schachtabschnittes 16a in Strömungsbündeln 27 in den Fallschacht 16 eingedüst und dabei aus den Sprühdüsen 15 mit fliessfähigem Bindemittel wie Phenolharz beaufschlagt. Durch die geschilderten Massnahmen vor der Beaufschlagung mit dem Bindemittel sind die Fasern selbst bei der Erzeugung dicker Fasern im Bereich von 10 μm oder mehr an dieser Stelle bereits ausreichend abgekühlt, um nicht zu einem sofortigen Aushärten des Bindemittels zu führen. Wegen weiterer Einzelheiten insoweit wird ausdrücklich auf die europäische Patentanmeldung EP-A1-194604 derselben Anmelderin mit demselben Einrichtungsdatum und Prioritätsdatum verwiesen und Bezug genommen.

Das auf den Fasern anhaftende Bindemittel gelangt mit diesen auf das Förderband 3 unter weiterer Abkühlung und wird aus dem Bereich des Fallschachtes 16 hinausbefördert und dort weiter abgekühlt, bevor die gezielte Aushärtung durch Wärmezufuhr in einem Tunnelofen erfolgt. Soweit jedoch Fasern die Umfangswände 18, 20 des Fallschachtes 16 berühren, besteht die Gefahr, dass die Faser dort haftet und verweilt, so dass das Bindemittel vor einer weiteren Abkühlung Gelegenheit zur Entwicklung von Bindungskräften besitzt und die Faser endgültig an die Wand anheftet, was zu den einleitend geschilderten Anbackungen führen kann. Überraschend hat sich gezeigt, dass durch Flüssigkeit stark gekühlte, also etwa auf Raumtemperatur oder noch geringerer Temperatur gehaltene Umfangswände 18, 20 des Schachtes diese Tendenz des Bindemittels zur Verfestigung zumindest im Berührungsbereich mit der Wand vollständig unterbindet, so dass nachfolgend auftreffende Fasern, turbulente Luftströmungen usw. die Faser wieder von der Wand ablösen und dem Förderband 3 zuführen können.

Wie in der veranschaulichten Vergrösserung veranschaulicht ist, bestehen die Umfangswände 18, 20 hierzu aus Innenwandteilen 28 und Aussenwandteilen 29, welche die Doppelwand bilden und zwischen sich einen Hohlraum 30 für die Zirkulation von Kühlflüssigkeit wie Kühlwasser belassen. Von aussen her betrachtet, ist die Umfangswand 18 oder 20 lediglich eine etwas dickere Blechwand, die aber als starre Wand problemlos dicht gestossen werden kann, so dass Faserverluste durch Undichtheiten, die Ansaugung von Falschluft usw. sicher vermieden sind. Selbst bei dauerhaft anhaftenden Fasern erfolgt keine Aushärtung des Bindemittels, so dass diese von Zeit zu Zeit, etwa im Abstand von mehreren Tagen, einfach mit Reinigungsflüssigkeit ausgespritzt werden können und danach die Umfangswände 18, 20 des Fallschachtes 16 wieder vollständig sauber vorliegen. Produktionsstörungen durch herabfallende ausgehärtete Anbackungen oder dergleichen sind vollständig ausgeschlossen.

Dadurch, dass dauerhafte Anbackungen oder dergleichen vermieden sind, besteht auch grössere Freizügigkeit hinsichtlich der zulässigen Bewegung etwa der Seitenwände 18 des unteren Schachtabschnittes 16c in die Bahn der fallenden Fasern hinein, also in einer Position, in der ohne intensive Kühlung ein praktisch unverzügliches Anwachsen von Anbackungen gewiss wäre, da der Reinigungseinfluss der Schwerkraft praktisch ausgeschaltet ist. Es hat sich gezeigt, dass bei erfindungsgemäss gekühlten Schachtwänden selbst in derartigen Schräglagen, die sich für eine Faserablagerung eignen, keine Ablagerungen einer störenden Dicke auftreten können.

**Patentansprüche**

1. Einrichtung zur Herstellung von Mineralfasern aus silikatischen Rohstoffen wie Basalt, insbesondere nach dem Düsenblasverfahren,
— mit einer Schmelzwanne und wenigstens einer daraus gespeisten Verteilerwanne (5) mit Austrittsöffnungen (6) für Primärfäden aus Schmelze (1),
— mit einer unterhalb der Austrittsöffnungen (6) mit Abstand hiervon symmetrisch zur Fallinie (11) der Primärfäden angeordneten Blasdüseneinrichtung (8),
— mit einem unterhalb der Blasdüseneinrichtung (8) angeordneten Fallschacht (16) mit starren Umfangswänden (18, 20),
— mit einem am unteren Ende des Fallschachtes (16) angeordneten Förderband (3) zur Ablage und Wegförderung der erzeugten Mineralfasern als kontinuierliche Bahn (2) und
— mit einer im Eintrittsbereich (26) des Fallschachtes (16) angeordneten Einrichtung (Sprühdüsen 15) zum Einsprühen von Bindemittel, insbesondere Phenolharz, in fliessfähiger Konsistenz in das divergierende Strömungsbündel (27),
dadurch gekennzeichnet, dass sämtliche Umfangswände (18, 20) des Fallschachtes (16) doppelwandig ausgebildet sind, und dass die Hohlräume (30) zwischen den Innenwandteilen (28) und Aussenwandteilen (29) der Umfangswände (18, 20) Anschlüsse (24, 25) für eine Versorgung mit Kühlflüssigkeit, insbesondere Kühlwasser, aufweisen.

2. Einrichtung nach Anspruch 1, dadurch gekennzeichnet, dass der Fallschacht (16) in eine Mehrzahl von in vertikaler Richtung benachbarten Schachtabschnitten (16a, 16b, 16c) mit jeweils eigenem Kühlflüssigkeitskreislauf unterteilt ist.

3. Einrichtung nach Anspruch 2, dadurch gekennzeichnet, dass wenigstens die die seitliche Begrenzung der erzeugten Mineralfaser-Bahn (2) ergebenden Seitenwände (18) des untersten Schachtabschnittes (16c) lageeinstellbar gehalten sind.

4. Einrichtung nach Anspruch 3, dadurch gekennzeichnet, dass die Seitenwände (18) parallel verschieblich gehalten sind.

**Revendications**

1. Dispositif pour fabriquer des fibres minérales à partir de matières brutes siliceuses telles que le basalte, en particulier selon le procédé d'étirage par soufflage, comportant:
— une cuve de fusion et au moins une auge de distribution (5), alimentée par la cuve de fusion et pourvue de trous de sortie (6) pour des filaments primaires (6) de matière en fusion (1);

— un système de tuyères de soufflage (8), situé en dessous des trous de sortie (6), à une certaine distance de ceux-ci, et symétriquement par rapport à l'axe de chute (11) des filaments primaires;

— un puits de chute (16), disposé en dessous du système de tuyères de soufflage (8), et pourvu de parois périphériques rigides (18, 20);

— une bande transporteuse (3), disposée en regard de l'extrémité inférieure du puits de chute (16), pour recevoir les fibres minérales qui se déposent sur cette bande, et en assurer l'évacuation sous la forme d'un tapis continu;

— et un système (gicleurs 15), disposé en regard de l'entrée (26) du puits de chute (16), pour projeter un liant tel qu'une résine phénolique, en consistance fluide, afin de faire pénétrer ce liant fluide dans le faisceau divergent (27) formé par les fibres qui sortent du système d'étirage;

caractérisé en ce que toutes les parois périphériques (18, 20) du puits de chute (16) sont réalisées en double épaisseur, et en ce que les volumes libres (30) ainsi ménagés entre les faces internes (28) et les faces externes (29) des parois périphériques (18, 20) sont pourvus de raccords (24) pour l'arrivée d'un liquide de refroidissement tel que de l'eau.

2. Dispositif conforme à la revendication 1, caractérisé en ce que le puits de chute (16) est divisé en plusieurs parties (16a, 16b, 16c), disposées à la suite l'une de l'autre dans le sens vertical, et pourvues chacune d'un circuit de liquide de refroidissement.

3. Dispositif conforme à la revendication 2, caractérisé en ce qu'il comporte des moyens de réglage, associés au moins aux parois latérales (18) de la partie inférieure extrême (16c) du puits de chute, pour faire varier la position de ces parois latérales (18) qui déterminent les limites des bords du tapis de fibres minérales (2) obtenu à la sortie du dispositif.

4. Dispositif conforme à la revendication 3, caractérisé en ce que les parois latérales (18) sont réglables par coulissement parallèle.

## Claims

1. Apparatus for producing mineral fibres from silicate raw materials, such as basalt, by the jet process, comprising

— a melting tank and at least one distributor tank (5), which is fed from the melting tank and provided with outlet openings (6) for primary threads of molten material (1),

— blast nozzle means (8), which are disposed below and spaced from the outlet openings (6) and are symmetrical with respect to the trajectory (11) of the primary threads,

— a downshaft (16), which is disposed below the blast nozzle means (8) and has rigid peripheral walls (18, 20),

— a conveyor belt (3), which is disposed at the lower end of the downshaft (16) and serves to receive and carry away the resulting mineral fibres as a continuous web (2) and

— means (spray nozzles 15), which are disposed in the inlet portion (26) of the downshaft (16) and serve to spray a binder, particularly phenolic resin, in a flowable consistency to the divergent stream bundle (27), characterized in that all peripheral walls (18, 20) of the downshaft (16) are double-walled and the cavities (30) between the inner wall portions (28) and the outer wall portions (29) of the peripheral walls (18, 20) comprise ports (24, 25) for the supply of a liquid coolant, particularly cooling water.

2. Apparatus according to claim 1, characterized in that the downshaft (16) is divided into a plurality of vertically adjacent shaft sections (16a, 16b, 16c), each of which has a separate liquid coolant circuit.

3. Apparatus according to claim 2, characterized in that at least those side walls (18) of the lowermost shaft section (16c) which provide a lateral boundary for the resulting web (2) of mineral fibres are adjustably held in position.

4. Apparatus according to claim 3, characterized in that the side walls (18) are held to be displaceable in parallel.

# FIG.1

# FIG.2